# EUROPEAN PATENT SPECIFICATION

(11) **EP 2 266 818 B1**
(45) Date of publication and mention of the grant of the patent: **28.03.2012**
(21) Application number: 10165844.1
(22) Date of filing: 14.06.2010
(51) Int. Cl.: B60C 1/00, B29B 15/08

(54) **Tire with metallized organic short fibers**
Reifen mit metallisierten organischen Kurzfasern
Pneu avec fibres courtes organiques métallisées

(30) Priority: 19.06.2009 US 423981
(43) Date of publication of application: 29.12.2010
(73) Proprietor: The Goodyear Tire & Rubber Company, Akron, OH 44316-0001 (US)
(72) Inventor: Imhoff, Serge Julien Auguste, L-9184, Schrondweiler (LU); Tahon, Julia Martine Françoise Claudine, L-7595 Reckange (LU); Mruk, Ralf, L-7740, Colmar-Berg (LU)
(74) Representative: Kutsch, Bernd

(56) References cited:
- EP-A1- 1 277 874
- JP-A- 11 099 811

## Description

### Field of the Invention

The present invention is directed to a pneumatic tire. More specifically, the present invention is directed to a pneumatic tire with one component comprising metalized organic short fibers.

### Background of the Invention

Conventional tires utilize short or chopped fibers for reinforcing various rubber components of the tire. The short/chopped fibers have been typically first dipped in adhesive and subsequently chopped and added to the rubber. The adhesive allows the fibers to adhere to the rubber matrix. However, the bare cut ends often lead to micro-cracks when the component incurs tension or compression, since the bare cut ends of the fibers, having no adhesive layer, are in direct contact with the rubber matrix and thereby have little or no adhesion to the rubber matrix. Therefore, it would be desirable to improve adhesion of the short fibers with the rubber matrix.

EP-A-1277874 describes a tire in accordance with the preamble of claim 1.

### Summary of the Invention

The invention relates to a pneumatic tire according to claim 1.

Dependent claims refer to preferred embodiments of the invention.

Preferably, both the length and the ends of the short fibers are completely coated with a layer of metal.

### Definitions

The following definitions are controlling for the disclosed invention.

"Apex" means an elastomeric filler located radially above the bead core and between the plies and the turnup ply.

"Axial" and "axially" means lines or directions that are parallel to the axis of rotation of the tire.

"Lateral Edge" means the axially outermost edge of the tread as defined by a plane parallel to the equatorial plane and intersecting the outer ends of the axially outermost traction lugs at the radial height of the inner tread surface.

"Radial" and "radially" mean directions radially toward or away from the axis of rotation of the tire.

"Shoulder" means the upper portion of sidewall just below the tread edge, effects cornering. Tread shoulder or shoulder rib means that portion of the tread near the shoulder.

"Sidewall" means that portion of a tire between the tread and the bead.

"Tread Width" means the arc length of the tread surface in the axial direction, that is, in a plane parallel to the axis of rotation of the tire.

### Brief Description of the Invention

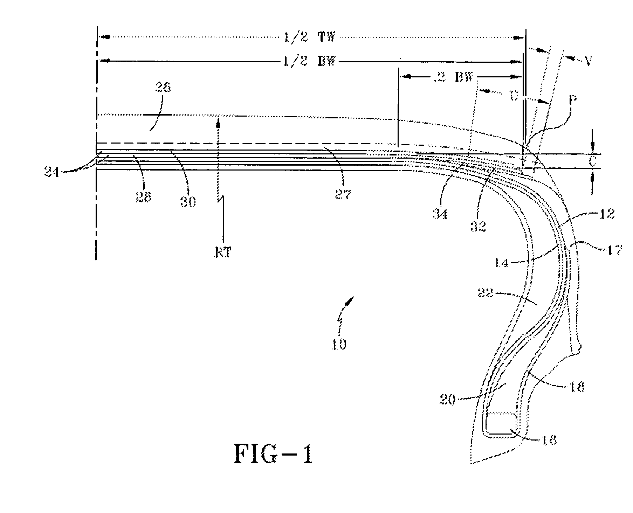

The invention will be described by way of example and with reference to the accompanying FIGURE 1, in which is illustrated a cross sectional view of an example tire for use with the present invention.

### Detailed Description of the Invention

Referring now to FIGURE 1, there is shown in cross sectional view a segment of an example molded, preferably self-supporting radial ply tire 10 incorporating for use with the present invention. The non-illustrated half of the example tire 10 is preferably symmetrical to that illustrated. The carcass has at least one radial ply layer forming the primary reinforcing structure to the example tire 10. In this tire 10, the carcass has an outer radial ply layer 12, an inner radial ply layer 14, together comprising a radial ply carcass structure. The turnup end 18 of the inner radial ply layer 14 is wrapped about an inextensible annular bead 16 with the terminal ends of the ply layer being radially inward and axially outward of a belt structure 24.

To space the turn-up ply 18 of the inner radial ply layer 14 from the outer radial ply layer 12, an apex 20 may be placed radially outward of the annular bead 16. Radially inward of the ply layers 12, 14, in each sidewall 17, is a sidewall wedge insert 22. The sidewall wedge insert 22 may provide the example tire 10 with run-flat, self-supporting capabilities. Though FIG. 1 shows a self-supporting run-flat tire design, it is also contemplated that the present invention may be incorporated in non self-supporting type tires or other types of run-flat or non-run-flat tires, i.e. the presence of the sidewall wedge insert 22 is optional.

A tread 26 and the belt structure 24 are disposed radially outward of the carcass ply layers 12, 14. The tread 26 may have a base compound 27 for stabilizing a footprint of the tire 10 under severe handling conditions. The belt structure 24 has at least one radially innermost ply 28 of parallel cords that is directly adjacent to the outermost radial carcass ply layer 12 for the majority of its axial width. Outward of the innermost ply 28 may be at least one more belt ply 30 of parallel cords. The parallel cords of the adjacent belt layer 30 are preferably inclined at an equal, but opposite, angle from the inclination of the cords in the innermost belt ply 28. The belt plies 28, 30 may be staggered with a difference in width preferably in a range of from 3 mm to 20 mm.

In the lateral regions of the example tire 10, the radially innermost belt ply 28 is distanced from the carcass plies 12, 14 as the carcass ply path follows the outer contour of the run-flat insert 22. Preferably, in the outer 20% of the belt width BW, the belt plies 28, 30 curve radially inward. The belt ply radial drop C may be defined as the drop of the centerline of the belt structure 24 from a point at 20% of the belt width BW to the axially outermost point of the belt center line. The belt ply radial drop C may influence heel and toe wear of the tire 10. A lower belt ply radial drop C may improve the heel and toe wear of the tread 26.

The belt structure 24 of the example tire 10 may have a width BW of at least 95% of the tread width TW such as 96% to 99% of the tread with TW or 96% to 105% of the tread width TW. The tread width TW is measured from a shoulder drop point P along an outer profile of the example tire 10. A wider belt structure 24 may increase the high speed performance of the tire 10, but may also necessitate a structure for maintaining the belt edges at a desired profile and a minimized belt ply radial drop C.

The outer surface of the tread 26 may be defined by a smoothly continuous profile. The example tread 26 is illustrated with no grooves. However, those skilled in the art will appreciate that the tread 26 may be grooved in any number of tread patterns. Whatever groove pattern is selected, the surface of the tread 26 may have the disclosed surface profile. In the central region of the tread 26, the profile defined by a radius of curvature RT, which may be similar to the belt profile curvature, creating a substantially constant tread thickness. At the lateral tread edges, in the shoulders of the tire 10, the tread thickness may decrease, and the radii defining the tread profile may decrease.

To maintain the spacing between the lateral edges of the belt structure 24 and the carcass plies 12, 14 in the shoulder region of the tire 10, a rubber wedge may be inserted into the spacing. To improve high speed durability of the example tire 10, the spacing may be partly maintained by an annular reinforcing strip layer 32 located radially inward of the lateral edges of the radially innermost belt layer 28. The reinforcing strip layer 32 may have a width U that prevents the belt layers 28, 30 from lifting at an inside edge 34 of the reinforcing strip layer. A width U of the strip layer 32 is preferably at least 5 mm and, more preferably, not greater than 30 mm such as between 10 mm to 20 mm. If the width U of the layer 32 is greater than 30 mm, a bend in the belt structure 24 may occur.

In accordance with the present invention, metallized organic short fibers may be used as anisotropic reinforcement for one or more components of a tire, such as the example tire 10 of FIGURE 1. The excellent tensile properties of organic short fibers produce improved fiber-reinforced compounds with improved anisotropic mechanical properties. Metallized fibers are particularly useful, since the metallic coating does not modify the mechanical properties of the fibers, as adhesives typically do.

Conventionally, fibers have been dipped and then chopped. The longitudinal surface of such fibers may have acceptable adhesion with a rubber matrix, but the bare, uncoated cut ends may lead to micro-cracks in the rubber matrix under tension-compression loads, since the rubber matrix is in direct contact with the uncoated, cut ends of the fibers and thus has little or no adhesion to those ends.

Short fibers in accordance with the present invention preferably provide complete coating of the short fibers, including the ends, with a metallic layer thereby producing enhanced adhesion, or affinity, with the rubber matrix. The micro-cracks described above are greatly mitigated, if not completely eliminated under tension-compression loads.

The short fibers may be electrochemically coated with a metal layer, as performed by Soliani EMC of Como, Italy (www.solianiemc.com), for example. Metals or metal alloys for the coating of the textile surface may include nickel, copper, gold, brass, silver, and/or other suitable metal. Adhesion of the metallized short fibers to the compound matrix may be assured by the same coat compound ingredients as required for the adhesion of brass or bronze plated steel reinforcements (i.e., cobalt salt). The adhesion between the organic fiber surface of the short fibers and the metal coating may be provided by interactions of metal ions or atoms on the fiber surface.

Materials for the short fibers may be PBO, aramid, glass fiber, carbon fiber, nylon, cellulose fibers including rayon and Lyocell, polyester, polyketone, or other suitable organic materials. Further materials for the short fibers may be polyvinyl alcohol, acrylic, and polypropylene fibers. The short fibers may be utilized, for example, in the sidewall 17, the apex 20, the insert 22 or the base compound 27 of the tire 10. The length of the short fibers preferably ranges, for example, from 1 mm to 10 mm or, more preferably from 1 mm to 5 mm, with an average of preferably about 3 mm. The diameter of the short fibers preferably ranges from 5 microns to 30 microns. The introduction of the completely metallized organic short fibers, in accordance with the present invention, into a tire component may lead to improved anisotropic mechanical properties of that component and thereby improve overall tire performance.

As stated above, rubber components for use in pneumatic tires are sometimes reinforced with these short textile/organic fibers. In general, the presence of short fibers in a cured rubber compound results in an increase in initial or low strain (low elongation) modulus (stiffness). Concomitantly, the presence of conventional short fibers in rubber often times results in reduced fatigue endurance and higher hysteretic heat build-up under periodic stresses.

Improvement in the performance of tires containing short fibers has been obtained by treating the surface of the fibers with chemical adhesives to improve the adhesion between the fiber and the rubber. However, such chemical surface treatments do not always result in the desired performance. Further, composite materials may comprise reinforcing elements (i.e., short or chopped fibers of glass, carbon, boron, polyamide etc.) and a joining matrix such as rubber. The properties of such a composite material may particularly depend upon on the orientation of the reinforcing elements, the distribution of the rubber matrix throughout the volume between the reinforcing elements, and the bond induced between the reinforcing elements and the matrix. Thus, short fiber reinforcement of components in accordance with the present invention may improve impact/puncture resistance of the sidewall 17, improve ride and handling characteristics produced by the apex 20 or wedge insert 22, or improve stabilization of the footprint produced by the base compound 27.

## Claims

1. A pneumatic tire (10) comprising at least one component, the at least one component comprising a rubber composition, the rubber composition comprising a diene based elastomer and from 1 to 100 parts by weight of a metallized organic short fiber or a metallized short glass or carbon fiber, per 100 parts by weight of elastomer, the short fibers having a length from 1 mm to 10 mm, the length of the short fibers being coated with a layer of metal or metal alloy, **characterized in that** both the length and the ends of the short fibers are coated with a layer of metal or alloy.

2. The pneumatic tire as set forth in claim 1 wherein the component is a sidewall (17) disposed radially inward of a ply layer (28, 30) of the pneumatic tire (10).

3. The pneumatic tire as set forth in at least one of the previous claims wherein the component is an apex (20) disposed radially outward of a bead (16) of the pneumatic tire (10).

4. The pneumatic tire as set forth in at least one of the previous claims wherein the component is a wedge insert (22) disposed axially inward of a sidewall (17) of the pneumatic tire (10).

5. The pneumatic tire as set forth in at least one of the previous claims wherein the component is a base compound (27) of a tread (26) of the pneumatic tire (10).

6. The pneumatic tire as set forth in at least one of the previous claims wherein the short fibers comprise an organic material selected from the group consisting of PBO, aramid, nylon, cellulose fibers, polyester, and polyketone.

7. The pneumatic tire as set forth in at least lone of the previous claims wherein a material for the layer of metal or metal alloy is selected from the group consisting from nickel, copper, gold, brass, and silver.

8. The pneumatic tire as set forth in at least one of the previous claims wherein the diene based elastomer is selected from the group consisting of natural rubber, synthetic polyisoprene, polybutadiene, and styrene-butadiene rubber.

9. The pneumatic tire as set forth in at least one of the previous claims wherein the short fibers comprise a material selected from the group consisting of polyvinyl alcohol, acrylic, and polypropylene fibers.

10. The pneumatic tire of at least one of the previous claims wherein the short fibers have a length in a range of from 1 mm to 5 mm.

11. The pneumatic tire of at least one of the previous claims wherein the short fibers have a diameter in a range of from 5 µm to 30 µm.

## Patentansprüche

1. Luftreifen (10), umfassend mindestens ein Bauteil, wobei das mindestens eine Bauteil eine Kautschukzusammensetzung umfasst, wobei die Kautschukzusammensetzung ein dienbasiertes Elastomer und 1 bis 100 Gewichtsteile einer metallisierten organischen Kurzfaser oder einer metallisierten kurzen Glas- oder Kohlenstofffaser, je 100 Gewichtsteile Elastomer, umfasst, wobei die Kurzfasern eine Länge von 1 mm bis 10 mm aufweisen, wobei die Länge der Kurzfasern mit einer Schicht aus Metall oder Metalllegierung überzogen ist, **dadurch gekennzeichnet, dass** sowohl die Länge als auch die Enden der Kurzfasern mit einer Schicht aus Metall oder Legierung überzogen sind.

2. Luftreifen, wie in Anspruch 1 erläutert, wobei das Bauteil eine radial einwärts von einer Lagenschicht (28, 30) des Luftreifens (10) angeordnete Seitenwand (17) ist.

3. Luftreifen, wie in mindestens einem der vorgenannten Ansprüche erläutert, wobei das Bauteil ein radial auswärts von einem Wulst (16) des Luftreifens (10) angeordnetes Kernprofil (20) ist.

4. Luftreifen, wie in mindestens einem der vorgenannten Ansprüche erläutert, wobei das Bauteil ein axial einwärts von einer Seitenwand (17) des Luftreifens (10) angeordneter Keileinsatz (22) ist.

5. Luftreifen, wie in mindestens einem der vorgenannten Ansprüche erläutert, wobei das Bauteil eine Untergummimischung (27) einer Lauffläche (26) des Luftreifens (10) ist.

6. Luftreifen, wie in mindestens einem der vorgenannten Ansprüche erläutert, wobei die Kurzfasern ein organisches Material umfassen, ausgewählt aus der aus PBO, Aramid, Nylon, Cellulosefasern, Polyester und Polyketon bestehenden Gruppe.

7. Luftreifen, wie in mindestens einem der vorgenannten Ansprüche erläutert, wobei ein Material für die Schicht aus Metall oder Metalllegierung aus der aus Nickel, Kupfer, Gold, Messing und Silber bestehenden Gruppe ausgewählt ist.

8. Luftreifen, wie in mindestens einem der vorgenannten Ansprüche erläutert, wobei das dienbasierte Elastomer aus der aus Naturkautschuk, synthetischem Polyisopren, Polybutadien und Styrol-Butadien-Kautschuk bestehenden Gruppe ausgewählt ist.

9. Luftreifen, wie in mindestens einem der vorgenannten Ansprüche erläutert, wobei die Kurzfasern ein Material umfassen, das aus der aus Polyvinylalkohol-, Acryl- und Polypropylenfasern bestehenden Gruppe ausgewählt ist.

10. Luftreifen nach mindestens einem der vorgenannten Ansprüche, wobei die Kurzfasern eine Länge in einem Bereich von 1 mm bis 5 mm aufweisen.

11. Luftreifen nach mindestens einem der vorgenannten Ansprüche, wobei die Kurzfasern einen Durchmesser in einem Bereich von 5 µm bis 30 µm aufweisen.

## Revendications

1. Bandage pneumatique (10) comprenant au moins un composant, ledit au moins un composant comprenant une composition de caoutchouc, la composition de caoutchouc comprenant un élastomère à base diénique et à concurrence de 1 à 100 parties en poids, une courte fibre organique métallisée ou une courte fibre de verre ou de carbone métallisée, par 100 parties en poids d'élastomère, les courtes fibres possédant une longueur de 1 mm à 10 mm, la longueur des courtes fibres étant recouverte d'une couche de métal ou d'un alliage de métal, **caractérisé en ce que** à la fois la longueur et les extrémités des courtes fibres sont enduites d'une couche de métal ou d'un alliage de métal.

2. Bandage pneumatique selon la revendication 1, dans lequel le composant est un flanc (17) disposé à l'intérieur en direction radiale d'une couche de nappe (28, 30) du bandage pneumatique (10).

3. Bandage pneumatique selon au moins une des revendications précédentes, dans lequel le composant est un bourrage sur tringle (20) disposé en direction radiale à l'extérieur d'un talon (16) du bandage pneumatique.

4. Bandage pneumatique selon au moins une des revendications précédentes, dans lequel le composant est un insert cunéiforme (22) disposé en direction axiale à l'intérieur d'un flanc (17) du bandage pneumatique (10).

5. Bandage pneumatique selon au moins une des revendications précédentes, dans lequel le composant est un composé de base (27) d'une bande de roulement (26) du bandage pneumatique (10).

6. Bandage pneumatique selon au moins une des revendications précédentes, dans lequel les courtes fibres comprennent une matière organique choisie parmi le groupe constitué par du PBO, de l'aramide, du nylon, des fibres cellulosiques, du polyester et de la polycétone.

7. Bandage pneumatique selon au moins une des revendications précédentes, dans lequel la matière pour la couche de métal ou d'alliage métallique est choisie parmi le groupe constitué par du nickel, du cuivre, de l'or, du laiton et de l'argent.

8. Bandage pneumatique selon au moins une des revendications précédentes, dans lequel l'élastomère à base diénique est choisi parmi le groupe constitué par du caoutchouc naturel, du polyisoprène synthétique, du polybutadiène et un caoutchouc de styrène-butadiène.

9. Bandage pneumatique selon au moins une des revendications précédentes, dans lequel les courtes fibres comprennent une matière choisie parmi le groupe constitué par l'alcool polyvinylique, des fibres acryliques et des fibres de polypropylène.

10. Bandage pneumatique selon au moins une des revendications précédentes, dans lequel les courtes fibres possèdent une longueur dans la plage de 1 mm à 30 mm.

11. Bandage pneumatique selon au moins une des revendications précédentes, dans lequel les courtes fibres possèdent un diamètre dans la plage de 5 µm à 30 µm.
